# EUROPEAN PATENT SPECIFICATION

(11) **EP 1 703 391 B1**
(45) Date of publication and mention of the grant of the patent: **28.04.2010**
(21) Application number: 06003406.3
(22) Date of filing: 20.02.2006
(51) Int. Cl.: G06F 9/54

(54) **Vehicle control software and vehicle control apparatus**
Fahrzeugsteuerungssoftware und Fahrzeugsteuerungsvorrichtung
Logiciel de commande de véhicule et appareil de commande de véhicule

(30) Priority: 17.03.2005 JP 2005077864
(43) Date of publication of application: 20.09.2006
(73) Proprietor: HITACHI, LTD., Chiyoda-ku Tokyo 100-8280 (JP)
(72) Inventor: Yoshimura, Kentaro, Tokyo 100-8220 (JP); Narisawa, Fumio, Tokyo 100-8220 (JP); Miyake, Junji, Tokyo 100-8220 (JP); Irie, Toru, Tokyo 100-8220 (JP)
(74) Representative: MERH-IP Matias Erny Reichl Hoffmann

(56) References cited:
- EP-A- 1 034 982
- EP-A- 1 445 697
- US-B1- 6 195 708
- PANDAY A ET AL: "AIL: description of a global electronic architecture at the vehicle scale" DESIGN, AUTOMATION AND TEST IN EUROPE, 2001. CONFERENCE AND EXHIBITION 2001. PROCEEDINGS 13-16 MARCH 2001, PISCATAWAY, NJ, USA,IEEE, 13 March 2001 (2001-03-13), pages 113-115, XP002448818 ISBN: 0-7695-0993-2

## Description

### BACKGROUND OF THE INVENTION

### 1. Field of the Invention

The present invention relates to vehicle control software and a vehicle control apparatus for controlling the running state of a vehicle.

### 2. Description of the Related Art

In recent years, a vehicle control system for electronically controlling a vehicle using a microprocessor and software (computer program) executed by the microprocessor, has been rapidly developed. The electronic vehicle control system has allowed combustion,conditions in an engine to be elaborately controlled to enhance fuel economy or reduce exhaust gas. Furthermore, a system that integrally controls the moving state of an overall vehicle by operatively associating control means with respect to a braking force, a driving force, or a steering angle with this system by communications, has been made commercially practicable.

Because the software used for such a vehicle control system is very large in scale, a so-called object-oriented paradigm is used, based on which, a technique is adopted in which the software is divided into components and the development/reuse of the software is performed on a component basis.

Moreover, the vehicle control software is becoming organized by dividing it into a basic program for controlling the electronic control unit itself, sensors/actuators and the like, and a control application for controlling an engine, a change gear and the like by using the sensors/actuators.

As an example of a conventional art, JP A 2003-256201 discloses software having a program configuration in which a conversion program (management program) for converting data format is interposed between a public side program and a reference side program, and in which public side program data is suffered to conversion processing in keening with the timing of a reference request from the reference side program and is transferred to the public side program.

The software with this program configuration is capable of accommodating a difference in data format between the public side program and the reference side program, and preventing a reduction in reusability due to a mismatch between data formats.
EP 1 445 697 A2 shows a vehicle control program which has a platform program as a program including a device driver for making a computer execute processing for inputting data from a hardware device and transmitting data based on the input result to another processing. The control program also has a coupling processing section as a program for making the computer execute processing for mediating the data acquired by the processing using the platform program so as to be adapted to processing using an application program. The control program further has the application program as a program for making the computer execute processing based on the data acquired by the processing using the platform program.

### SUMMARY OF THE INVENTION

Here, let's consider a data transfer between a software component belonging to the basic program and a software component belonging to the control application. The basic program for use in the electronic control unit for vehicle control is manufactured by electronic control unit manufacturer, but the required specifications of control application, namely, the data formats, such as variable names, units of input/output values of sensors or actuators, are of a local nature in a manner such as to vary from one vehicle manufacturer to another.

This inhibits the standardization of data formats such as input/output values of sensors, actuators, in software components in the basic program section, thereby causing a problem of reducing reusability.

In order to avoid such a problem, there is a known method in which, as the above-described conventional art, there is provided a conversion program for converting a data format to access data of the basic program via the conversion program.

However, according to this method, conversion processing is executed each time data reference is made, and hence, when a plurality of control applications is referring to a single basic program (software component), conversion processing is performed each time a reference request occurs, thereby resulting in a high frequency of conversion processing. This raises a problem of reducing processing efficiency.

Another possible method for avoiding the above-described problem is to synchronize the timing of a data conversion with data update timing of the basic program.

This synchronized conversion, however, raises a problem in data concurrency in the control application. Specifically, in the control application executed in a task (for example, 10 ms period task) that is suffered to activate requests at the same time period, the control data on the basic program side must appear as if it was not being updated during the execution of the task.

According to the digital control theory, the control processing to be conducted in synchronization with a periodical external interrupt is designed under the assumption that the processing is instantaneously performed and that no state change occurs during the processing.

However, when software actually runs on the microprocessor, it needs somewhat execution time. As a result, even though state changes actually occur in the first half and the latter half, it is necessary to continue retaining the situation at a time point when the pertinent task has been activated, as seen from the control application.

Accordingly, the present invention is directed to real time vehicle control software that needs the conversion of a data format, and that is capable of reducing data conversion processing frequency to improve processing performance and enhance processing efficiency, and also maintaining the concurrency of the control data.

The object is solved according to the independent claims. Dependent claims describe preferred embodiments of the present invention.

The vehicle control software according to the present invention may include control data serving as information for controlling a vehicle; a public side software component serving as a software component for laying open the control data; a plurality of reference side software components each serving as a software component for referring to the control data; and/or data conversion software for converting a data format when transferring the control data between the public side software component and each of the reference side software components. Herein, the data conversion software is subjected to an activate request at a predetermined timing, makes a reference request of the public side software component, and converts the acquired control data into a data format to which the public side software component refers.

In the vehicle control software according to the present invention, it is preferable that the data conversion software store the converted control data as reference data, and that each of the reference side software components refer to the reference data.

In the vehicle control software according to the present invention, it is preferable that the data conversion software transfer the converted control data to each of the reference side software components, using data request command prepared by each of the reference side software components.

In the vehicle control software according to the present invention, it is preferable that the data format converted when the control data is transferred between the public side software component and each of the reference side software components, be at least either one of a variable name and a unit of variable.

In the vehicle control software according to the present invention, it is preferable that the timing at which the data conversion software is subjected to an activate request, be set independently of the timing at which each of the reference side software components is subjected to an activate request.

In the vehicle control software according to the present invention, it is preferable that the timing at which the data conversion software is subjected to an activate request, be set independently of the timing at which the public side software component is subjected to an activate request.

In the vehicle control software according to the present invention, it is preferable that the timing at which the data conversion software is subjected to an activate request, be at least either one of a time period or an interrupt signal.

In the vehicle control software according to the present invention, it is preferable that the software component include a basic software component for controlling an electronic vehicle control apparatus equipped with vehicle control software, sensors, and actuators, and a control application component for controlling the state of an object to be controlled, using the basic software component.

In the vehicle control software according to the present invention, it is preferable that the control data be converted by the data conversion software when data is laid open and referred to between the basic software component and the control application component.

In the vehicle control software according to the present invention, it is preferable that the software component be a component that lays open the control data and that refers to the control data.

In the vehicle control software according to the present invention, it is preferable that the software component have an interface that clearly specifies the distinction between the public data and reference request data.

In the vehicle control software according to the present invention, it is preferable that the data conversion software refer to the distinction between the public data and the reference request data, the distinction being clearly specified by the software component.

The vehicle control apparatus for controlling a vehicle using a microcomputer has the software as recited in any one of the above paragraphs relating to the vehicle control software according to the present invention.

The vehicle control software according to the present invention is capable of installing data conversion software by designing the concurrency of control data, through making an activate request using not a timing invoked by the reference side component but another execution timing, as an execution timing for data conversion software.

The above features can be combined in any way partly or as a whole.

### BRIEF DESCRIPTION OF THE DRAWINGS

Fig. 1 is a block diagram of the outline of vehicle control software according to an embodiment of the present invention;
Fig. 2 is a block diagram of an embodiment of an electronic control unit for an engine to which the vehicle control software of the present invention is applied;
Fig. 3 is a block diagram showing the transfer of data between a control application section and a basic software section in the vehicle control software according to the embodiment of the present invention;
Fig. 4 is a block diagram of data conversion software according to a conventional art;
Fig. 5 is a block diagram of a construction example of engine control software as the vehicle control software into which the present invention is incorporated;
Fig. 6 is a block diagram of an example of an inner construction of an AP variable section of the vehicle control software according to the embodiment of the present invention;
Fig. 7 is a flowchart of 10 ms period task FW;
Fig. 8 is a flowchart of 10 ms period IOFW(1);
Fig. 9 is a flowchart of 10 ms period cashe FW(1);
Fig. 10 is a flowchart of 10 ms period application FW;
Fig. 11 is a flowchart of intake air quantity estimation processing by an intake air quantity estimation processing software component;
Fig. 12 is a flowchart of fuel quantity and ignition timing calculation processing by a fuel quantity and ignition timing calculation processing software component;
Fig. 13 is a flowchart of fault diagnosis processing by a fault diagnosis processing software component;
Fig. 14 is a flowchart of a 10 ms period cashe FW(2);
Fig. 15 is a flowchart of a 10 ms period IOFW(2);
Fig. 16 is a flowchart of an IOFW executed by engine rotation-synchronized interrupt handlers or event tasks;
Fig. 17 is a flowchart of a 40 ms period cashe FW; and
Fig. 18 is a flowchart of reset processing by a reset processing section.

### DESCRIPTION OF THE PREFERRED EMBODIMENTS

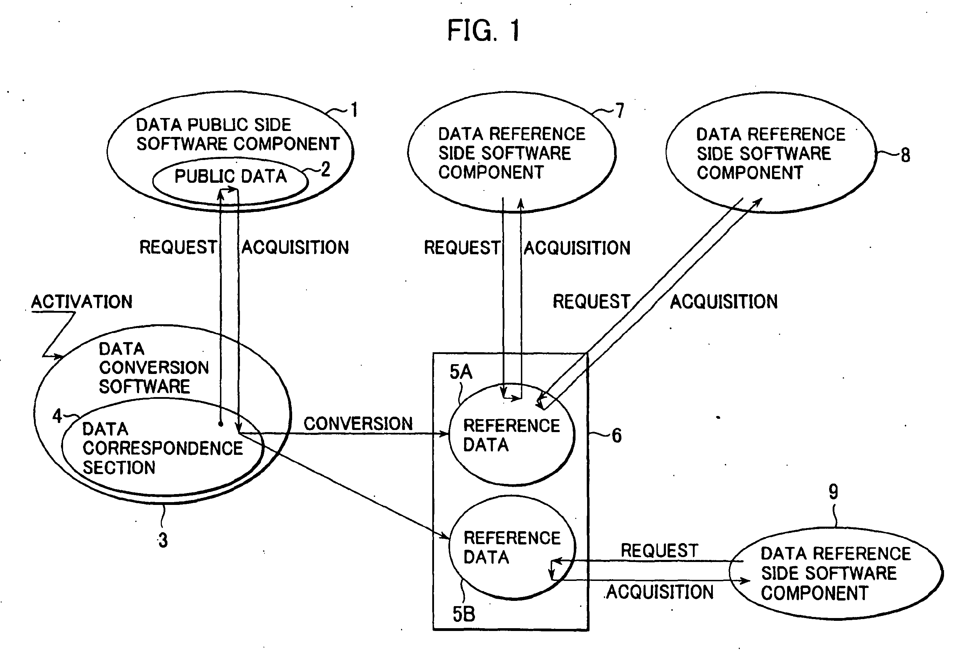

The outline of vehicle control software according to a first embodiment of the present invention will be described with respect to Fig. 1.

The vehicle control software according to this embodiment comprises a data public side software component 1 having public data 2, data conversion software (program) 3 having a data correspondense section 4, a data storage 6 storing reference data 5A and 5B, and first to third data reference side software components (programs) 7, 8, and 9.

The data public side software component 1 updates the public data 2 with timings determined for each software component.

The data conversion software 3 is activated at a predetermined timing such as a time period, an interrupt signal to a microprocessor core or the like. A data correspondense section 4 defines pieces of data to be converted at their respective activation timings.

The activated data conversion software 3 acquires a software component defined by the-data correspondense section 4, e.g., the public data 2 of the public side software component 1, making use of an interface prepared by the data public side software component 1.

After having converted the data name, the unit of a variable, and the like of the acquired public data 2, the data conversion software 3 stores them as reference data 5A into the data storage 6.

The first data reference side software component 7 and the second data reference side software component 8 are activated at their respective timings that are defined for each of the reference side software components, and perform data reference side processing according to their respective own programs, while making reference to the reference data 5A using an interface prepared by the data storage 6.

On the other hand, the data conversion software 3 is activated at a timing different from the above-described timing, converts the public data 2 of the data public side software component 1 that is identical to the foregoing, and stores the converted data as another reference data 5B different from the foregoing, into the data storage 6.

The third data reference side software component 9 performs data reference side processing according to its own program, while making reference to the reference data 5B using an interface prepared by the data storage 6.

With the above-described arrangements, even when a plurality of data reference side software components refers to a single piece of data, and a conversion of the data is needed, there is no need to perform conversion processing for each reference request, thereby leading to an improvement in software processing efficiency.

For example, suppose the identical data is referred to from a 10 ms period task. When update processing with respect to public data, serving as a source of data to be referred to is higher in priority than the 10 ms period task, the public data is undesirably changed in the course of processing by the 10 ms period task. This creates a problem in that, despite the processing activated by the same timing of 10 ms period, values obtained when the identical data is referred to, are different from one another.

Such a state is named as a "state in which the concurrency of a variable has been lost". By virtue of using the present arrangements, the effect of maintaining the concurrency of the reference data in the 10 ms period task is brought about.

Furthermore, suppose the identical public data is referred to from a 40 ms period task, as well. Here, it is assumed that the priority of the 10 ms period task is higher than that of the 40 ms period task.

If there is provided only a single piece of reference data with respect to a single piece of public data, data conversion processing is undesirably executed in the course of the 40 ms period task, thereby causing a problem of loss of the concurrency of a variable in the 40 ms period task.

As in this embodiment, preparing a plurality of pieces of reference data with respect to a single piece of public data and allocating the reference data to each task as required, has the effect of maintaining the concurrency of a variable even when referring to a single piece of the data from a plurality of tasks.

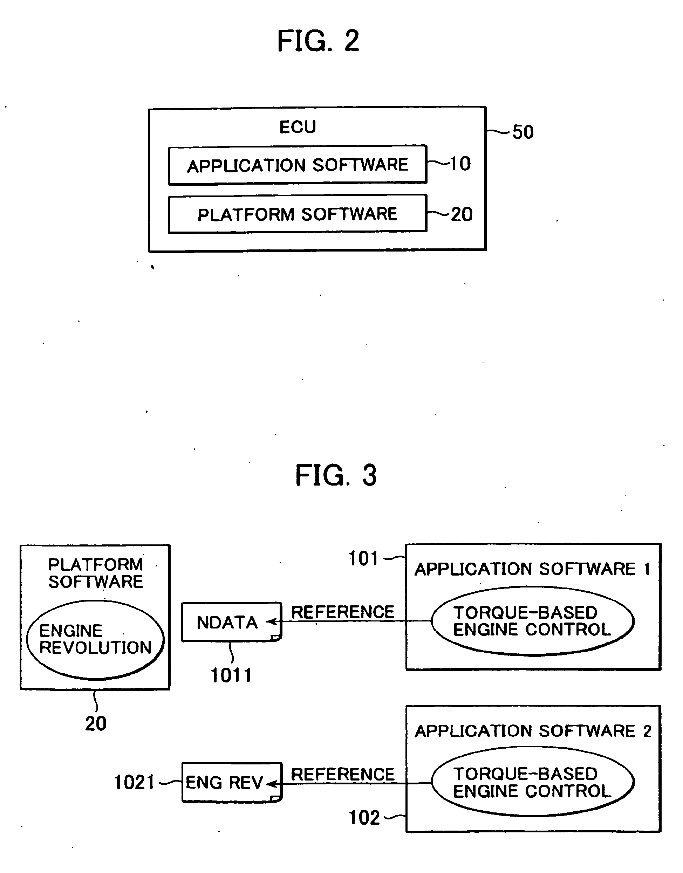

Fig. 2 shows an embodiment of an electronic control unit (ECU) 50 intended for an engine into which the vehicle control software according to the present invention is incorporated.

The software installed in the ECU 50 comprises a basic software (platform [PF] software) section 20 for controlling ECU itself, sensors/actuators and the like connected to the ECU, and an application section 10 for controlling an engine, a change gear and the like using the sensors/actuators.

The transfer of data between the application section 10 and the basic software section 20 will be described with respect to Fig. 3.

Recently, in keeping with the enlargement of the scale of software, an object-oriented paradigm is used, based on which, the software is organized by dividing it into components. Hence, the transfer of data is also performed using the interface of an object.

Meanwhile, the basic software section 20 has been developed by ECU manufacturers, while the control application section 10 has been developed by car manufacturers.

The interface of the basic software section 20 is shared among the ECU manufacturers, whereas the interface specifications of the control application section vary from one car manufacturer to another.

For example, let' consider the case in which the control application software component for controlling torque refers to an engine revolution number.

A first control application software component 101 for performing torque-based engine control attempts to access using an interface 1011 referred to as NDATA, while a second control application software component 102 for performing another type of torque-based engine control attempts to access using an interface 1021 referred to as EngRev.

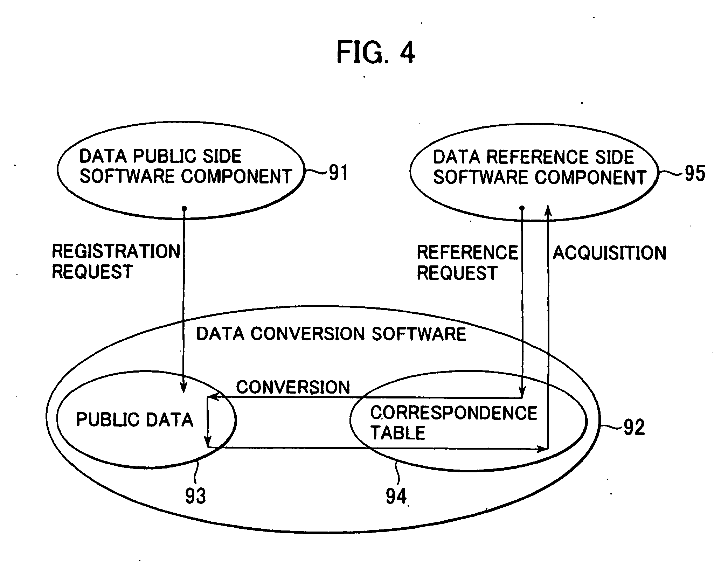

Here, data conversion software according to a conventional art will be described with reference to Fig. 4.

The data conversion software in Fig. 4 comprises a data public side software component 91, data conversion software 92 having public data 93 and a correspondense table 94, and a data reference side software component 95.

The data public side software component 91 performs public data registration with respect to the data conversion software 92, and updates the public data 93.

The data reference side software component 95 makes a data reference request with respect to the data conversion software 92. The data conversion software 92 having been subjected to the reference request correlates the required data with the public data 93, based on the correspondence table 94. Thereafter, the data conversion software 92 converts a data format such as a variable name or a variable unit of the corresponding public data 93, and transfers the converted data format to the data reference side software component 95 as a source of the reference request.

However, when using this configuration, each time a data reference request occurs, a data conversion must be performed. As a result, particularly in software that requires real time performance as in the vehicle control software, a problem of performance degradation is caused.

Also, in software in which a plurality of control tasks or interrupt handlers and event tasks are mixed as in the vehicle control software, the concurrency of variables in the control tasks is important.

If the concurrency of variables is not maintained, values that have been referred to are different between the first half and the latter half of the task despite processing activated at the same timing. This makes it difficult to ensure consistency of control logic.

In the arrangements as shown in Fig. 4, the conversion of data is performed for each reference request. Furthermore, the public data used when data is converted is registered at an operation timing of the data public side software component 91, so that, when an interface provided by the data conversion software is used, a problem arises in that the concurrency of a variable cannot be maintained on the data reference side.

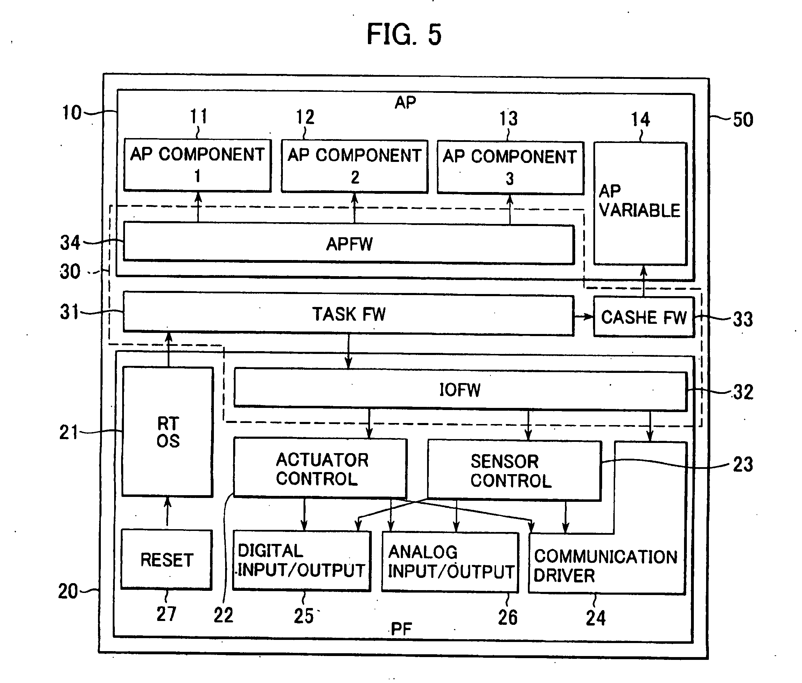

Fig. 5 shows a construction example of engine control software as vehicle control software into which the present invention is incorporated.

The vehicle control software shown in Fig. 5 includes a control application section 10, a basic software section 20, and a framework 30.

The control application section 10 comprises a first control software component (AP component 1: an intake air quantity estimation processing software component) 11; a second control software component (AP component 2: a fuel quantity and ignition timing calculation processing software component) 12; a third control software component (AP component 3: a fault diagnosis processing software component) 13; and an AP variable section 14 for mediating between the control application section 10 and the basic software section 20.

The basic software section 20 comprises a real time OS RTOS) 21; an actuator control function 22 for controlling a fuel injection function, ignition function and the like; a censor control function 23 for processing measurement values of a air flow rate sensor, an accelerator opening sensor and the like; a communication driver 24 for controlling communication functions such as CAN, LIN, and FlexRay; a digital input/output section 25 for performing digital input/output; an analog input/output section 26 for performing analog input/output; and a reset section 27 for performing processing upon the powering-up of the ECU 50.

The framework 30 comprises a task FW 31 for controlling a software component execution flow in a task, activated by the interrupt handler or the real time OS 21; an IOFW 32 for controlling a software component execution flow of the basic software section 20; a cashe FW 33 for controlling the execution flow of data conversion processing; and an application FW 34 for controlling a software component execution flow of the control application section 10.

The arrows in Fig. 5 indicate an example of invocation relationships between functions, wherein each of the arrow tails indicates an invoker, and each of the arrow heads indicates a destination of execution.

Upon the powering-up of the ECU 50, firstly the reset section 27 is executed, and the real time OS 21 is activated. The real time OS 21 activates a task in response to an interrupt to time or the microprocessor, and a task FW 31 is performed in the task. The task FW 31 executes the IOFW 32, cashe FW 33, application FW 34.

In accordance with a defined control flow, the IOFW 32 activates the software component of the actuator control function 22, that of the censor control function 23, or that of the communication driver 24.

The software component of the actuator control function 22 or that of the censor control function 23 controls the actuators or sensors, using the software component of the digital input/output section 25, analog input/output section 26, or communication driver 24.

In accordance with a defined control flow, the cashe FW 33 acquires sensor measurement values using an interface of the software component of the censor control function 23, and converts a variable name and a variable unit so as to conform to required specifications of the control application section 10, and stores them as AP variables (application variables) into the AP variable section 14.

The actuator control target values calculated by the software components on the control application side (e.g., the intake air quantity estimation processing software component 11, fuel quantity and ignition timing calculation processing software component 12, and fault diagnosis processing software component 13), are stored as AP variables into the AP variable section 14, and after data formats have been converted in accordance with the control flow suited to the cashe FW 33, they are transferred to the software component of the actuator control function 22.

In accordance with a defined control flow, the application FW 34 activates the control application software components 11, 12, and 13. The control application software components 11, 12, and 13 calculate control variables using sensors' measurement values that have been converted into AP valuables, or other values calculated by the control application software components. At this time, control variables serving as control target values of actuators are treated as AP variables.

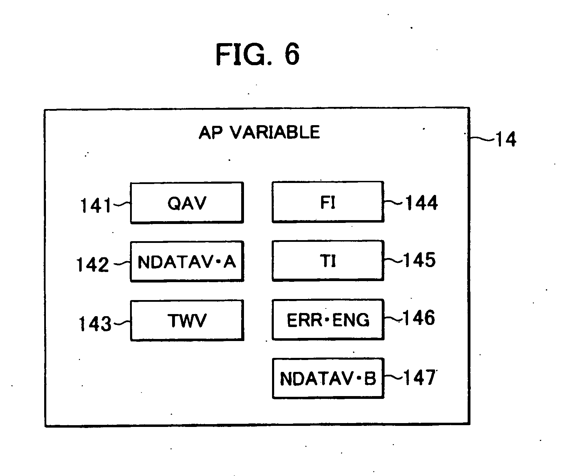

Fig. 6 shows an example of an inner structure of the AP variable section 14. The AP variable section 14 comprises an AP variable QAB 141, an AP variable NDATAV·A 142, an AP variable TWV 143, a fuel quantity FI 144, an ignition timing TI 145, a fault diagnosis result ERR·ENG 146, and an AP variable NDATAV·B 147.

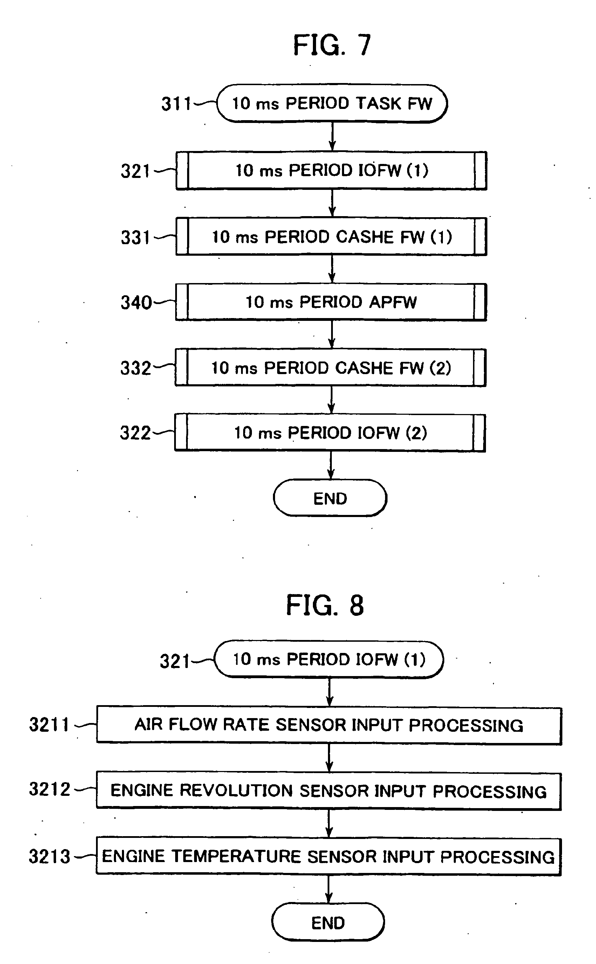

Fig. 7 is a flowchart of a 10 ms period task FW 311 for use in a task activated at a 10 ms period.

The 10 ms period task FW 311 executes a 10 ms period IOFW(1) 321, a 10 ms period cashe FW(1) 331, a 10 ms period application FW 340, a 10 ms period cashe FW(2) 332, and a 10 ms period IOFW(2) FW.

Fig. 8 is a flowchart of the 10 ms period IOFW(1) 321.

In step 3211, the 10 ms period IOFW(1) 321 performs sensor value input processing and update processing of the air flow rate sensor. Then, in step 3212, the 10 ms period IOFW(1) 321 performs sensor value input processing and update processing of the engine revolution number sensor. Thereafter, in step 3213, the 10 ms period IOFW(1) 321 performs sensor value input processing and update processing of the engine temperature sensor.

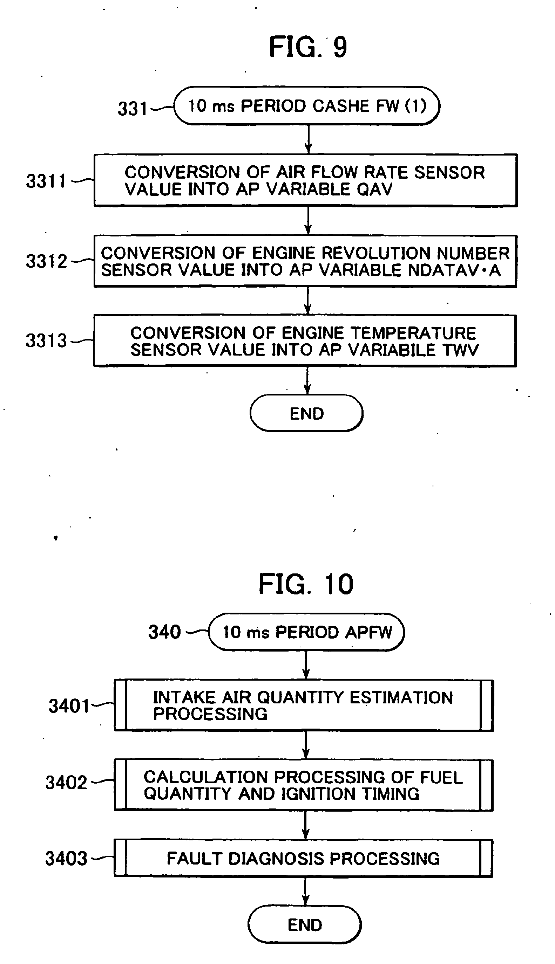

Fig. 9 is a flowchart of the 10 ms period cashe FW(1) 331.

In step 3311, the 10 ms period cashe FW(1) 331 acquires an air flow rate sensor value by using the interface of the censor control function 23, and after having converted a variable name and a variable unit, it stores them as AP variables QAV 141. In step 3312, the 10 ms period cashe FW(1) 331 acquires an engine revolution number sensor value by using the interface of the censor control function 23, and after having converted a variable name and a variable unit, it stores them as AP variables NDATAV-A 142. Then, in step 3313, the 10 ms period cashe FW(1) 331 acquires an engine temperature sensor value by using the interface of the censor control function 23, and after having converted a variable name and a variable unit, it stores them as AP variables TWV 143.

Fig. 10 is a flowchart of the 10 ms application FW 340.

In step 3401, the 10 ms period application FW 340 executes the intake air quantity estimation processing software component 11; in step 3402, it executes the fuel quantity and ignition timing calculation processing software component 12; and in step 3403, it executes the fault diagnosis processing software component 13.

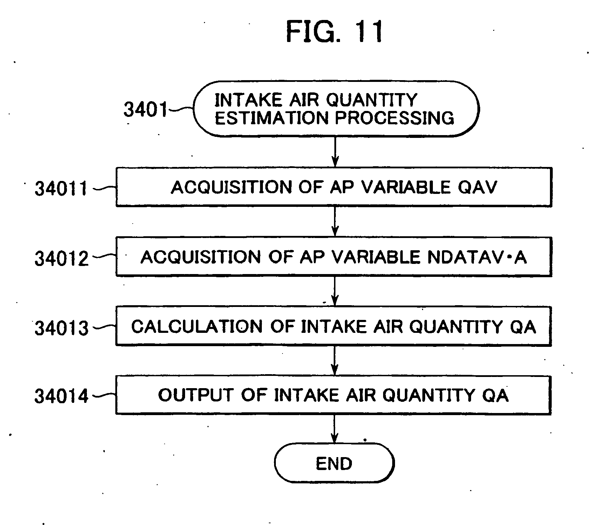

Fig. 11 is a flowchart of an intake air quantity estimation processing (step 3401) by the intake air quantity estimation processing software component 11.

In step 34011, the intake air quantity estimation processing software component 11 acquires the AP variable QAV 141, and in step 34012, it acquires the AP variable NDATAV-A 142. Then, based on these AP variables, the intake air quantity estimation processing software component 11 calculates the intake air quantity QA in step 34013, and stores the calculated value as a variable QA in step 34014.

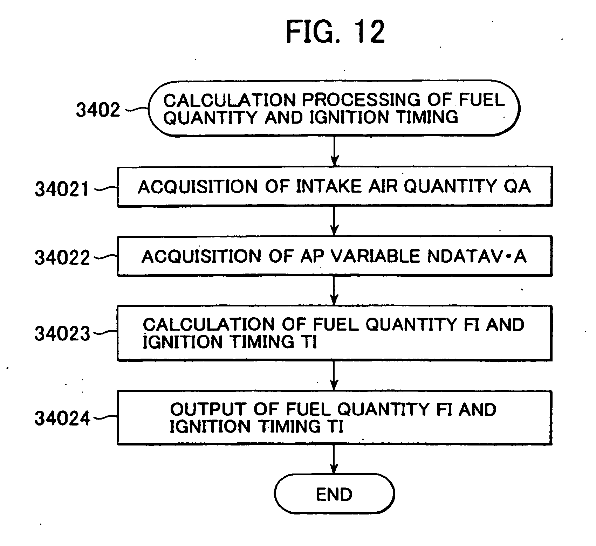

Fig. 12 is a flowchart of the fuel quantity and ignition timing calculation processing (step 3402) by the fuel quantity and ignition timing calculation processing software component 12.

In step 34021, the fuel quantity and ignition timing calculation processing software component 12 acquires the variable QA stored in step 34014; and in step 34022, it acquires the AP variable NDATAV·A 142. Then, based on these variables, the fuel quantity and ignition timing calculation processing software component 12 calculates the fuel quantity FI and the ignition timing TI in step 34023, and stores the calculated values as variable fuel quantity FI 144 and ignition timing TI 145 in step 34024.

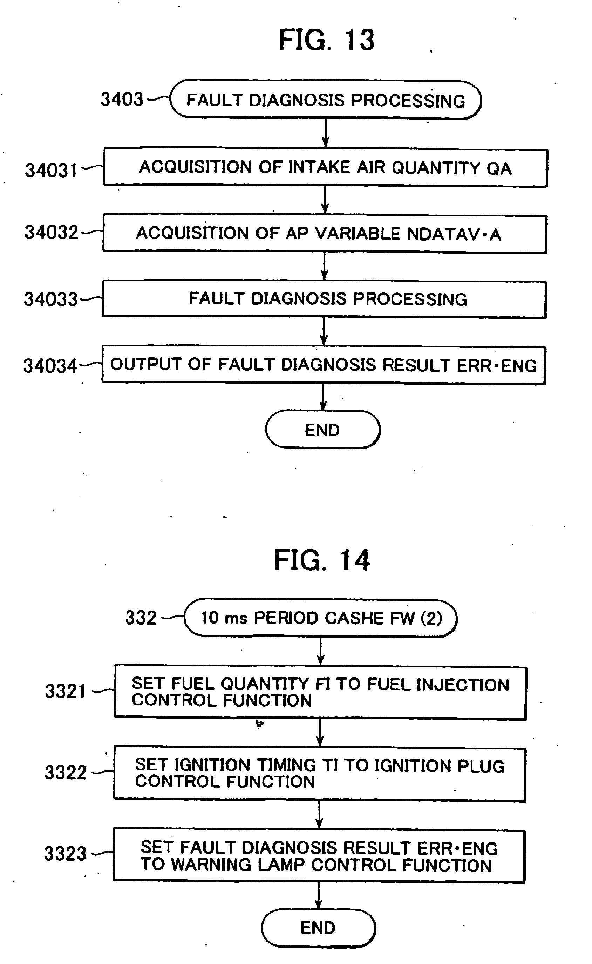

Fig. 13 is a flowchart of the fault diagnosis processing (step 34503) by the fault diagnosis processing software component 13.

In step 34031, the fault diagnosis processing software component 13 acquires the variable QA stored in step 34014; in step 34032, it acquires the AP variable NDATAV-A 142; in step 34033, it diagnoses an operating state of the engine; and in step 34034, it stores the diagnosis result as an AP variable fault diagnosis result ERR·ENG 146.

Fig. 14 is a flowchart of 10 ms period cashe FW(2) 332.

In step 3321, the 10 ms period cashe FW (2) 332 acquires the AP variable fuel quantity FI 144 using an interface of AP variable, and after having converted a variable unit, it sets the acquired AP variable fuel quantity FI value as a control target value of fuel injection quantity, using the interface of actuator control function 22.

In step 3322, the 10 ms period cashe FW (2) 332 acquires the AP variable ignition timing TI 145 using the interface of AP variable, and after having converted a variable unit, it sets the acquired AP variable ignition timing TI value as a control target value of ignition timing, using the interface of actuator control function 22.

In step 3323, the 10 ms period cashe FW (2) 332 acquires the AP variable fault diagnosis result ERR-ENG 146 using the interface of AP variable, and after having converted a variable unit, it sets the AP variable ignition timing TI value as an ON/OFF state of a warning lamp on an instrument panel, using the interface of actuator control function 22.

This state is a merely a state in which the target values have been set, and the set timings of these set target values are different from the use timings of theses set target values to be reflected to the actual control of the actuators.

Use of the arrangements described above makes it possible that, after all control target values necessary for the control have got together, they simultaneously reflect to the control, e.g., when performing combustion control for use in exhaust reduction or the like. Furthermore, even when the timing at which the control target value is updated and the timing at which the control is actually performed are different from each other, the use of above-described arrangements allows this situation to be addressed.

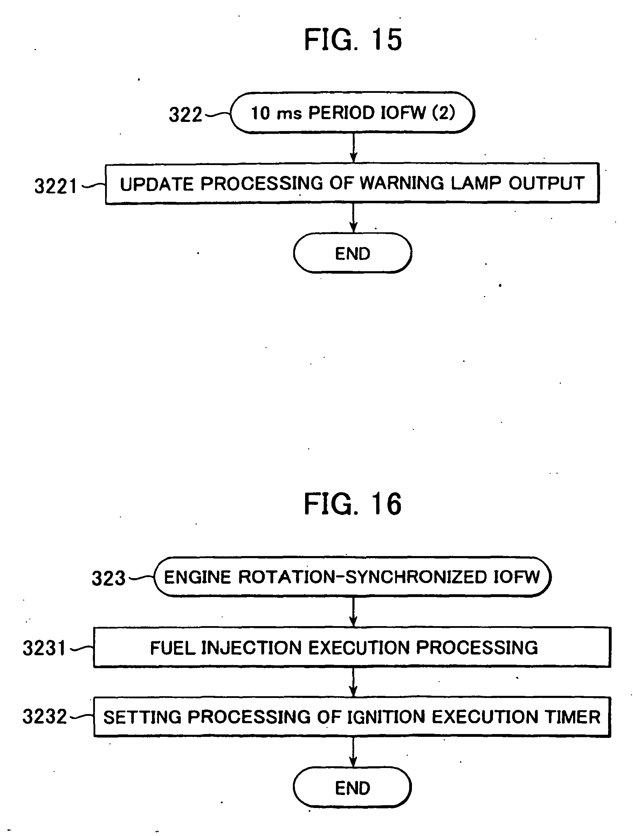

Fig. 15 is a flowchart of a 10 ms period IOFW(2) 322.

In step 3221, the 10 ms period IOFW(2) 322 requires update processing of the warning lamp output of the software component of the actuator control function 22.

Fig. 16 is a flowchart of an IOFW 323 executed by an engine rotation-synchronized interrupt handler or event task.

In step 3231, the IOFW 323 requires fuel injection execution processing of the software component of the actuator control function 22. Here, inside the actuator control function 22, the fuel injection execution processing is performed based on the fuel injection quantity set in step 3321. In step 3232, the IOFW 323 requires the activation of an ignition timer of the software component of the actuator control function 22. Here, inside the actuator control function 22, a microcontroller-controlled timer is set based on the ignition timing set in step 3322. In actuality, the ignition is made at the timing at which the timer is activated.

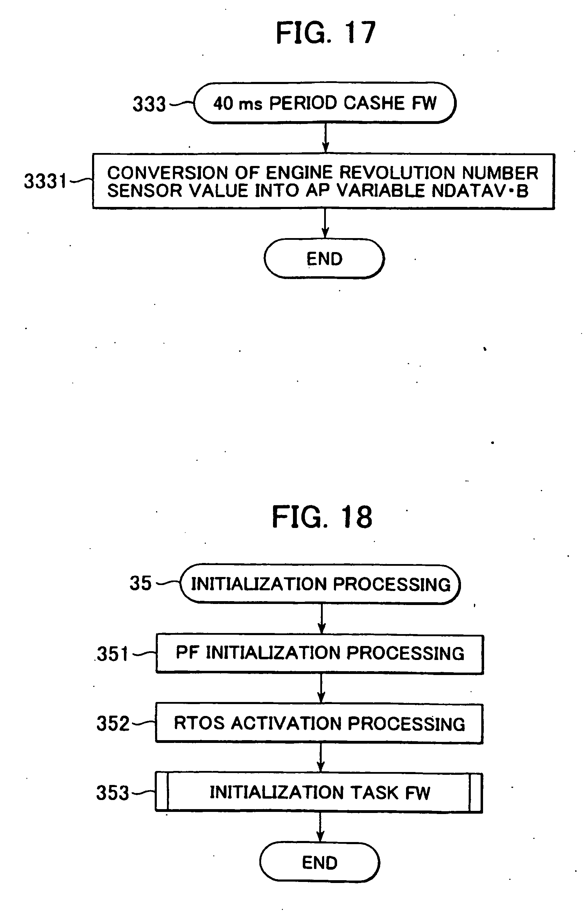

Fig. 17 is a flowchart of 40 ms period cashe FW 333.

In step 3331, the 40 ms period cashe FW 333 acquires an engine revolution number sensor value using the interface of the censor control function 23, and after having converted a variable name and a variable unit, it stores them as AP variables NDATAV-B 147. This makes it possible to maintain the concurrency of a sensor input value updated at a timing different from that of the control application, inside each of the task 10 ms period task and 40 ms period task that are activated at mutually different timings.

Fig. 18 is a flowchart of reset processing (initialization processing) 35 by the reset section 27.

In step 351, the reset section 27 performs initialization processing of the basic software section 20. The initialization processing is performed by using interfaces for the initialization processing, the interfaces being each prepared by the actuator control function 22, the censor control function 23, the communication driver 24, the digital input/output section 25, and the analog input/output section 26.

In step 352, the reset section 27 performs activation processing of the real time OS (RTOS) 21. Here, a time period task is activated. However, because an initialization task is thereafter executed with the maximum priority in step 353, the time period task, the interrupt handler, and the event task becomes executable after step 353 has been completed.

In step 353, the reset section 27 executes an initialization task FW. Here, as in the 10 ms period task in Fig. 7, the reset section 27 executes the IOFW 32, the cashe FW 33, and the application FW 34, thereby performing measurement of sensor values, initialization processing of the control application software component, and the like.

The effects of the vehicle control software according to this embodiment are summarized as follows:
(1) As an execution timing of data conversion data, there is provided not a timing invoked by the reference side component but another execution timing to make an activate request. This produces the effect of enabling the installation of data conversion software by designing the concurrency of the control data.
(2) The control data after having been subjected to a conversion is stored as reference data, and at the reference side program execution timing, the reference data after the conversion is referred to. This allows a reduction of the number of data conversions to a requisite minimum, thereby resulting in an improved processing performance.
(3) The transfer of data is comprises not only a flow from the basic software to the control application as in a sensor value, but also a flow from the control application to the basic software as in an actuator value. Therefore, when developing a control application, previously substituting a target value for control data without regard to an interface of the basic software, enables a data conversion program to set control data on the basic software side at a predetermined timing, thereby leading to an enhancement of reuse efficiency of the control application.
(4) Since data format converted when a transfer of the control data is performed between the public side software component and each of the reference side software components is at least either one of a variable name and a variable unit, the developer of a control application can develop without regard to a variable name, a variable unit, and an interface for use in data access that are prepared by the interface of the basic software, leading to an improvement in development efficiency and reuse efficiency.
(5) Since the timing at which the data conversion software is subjected to an activate request can be set independently of the timing at which each of the reference side software components is subjected to an activate request, the control flow of the timings of data conversion processing and that of processing performed by referring to data can be separated from each other, which leads to an improvement in development efficiency and reuse efficiency of software.
(6) Since the timing at which the data conversion software is subjected to an activate request can be set independently of the timing at which the data public side software component is subjected to an activate request, the control flow of the timings of the data conversion processing and that of processing performed by laying open data after having calculated it can be separated from each other, which leads to an enhancement of development efficiency and reuse efficiency of software.
(7) Since the timing at which the data conversion software is subjected to a activate request is at least either one of a time period or an interrupt signal, it is possible to execute conversion processing at a proper timing by rendering the timing of data conversion as an update period of each data, or an interrupt signal accompanied by a state change of an object to be controlled.
(8) By comprising the basic software component for controlling the electronic vehicle control apparatus equipped with software components or vehicle control software as well as sensors and actuators, and the control application component for controlling the states of objects to be controlled using the basic software component, the present vehicle control software is divided into the basic software section and the control application section, and the transfer of data is performed between the software components. Thereby, vehicle control software capable of compatibilizing software execution efficiency and the securement of data concurrency can be implemented.
(9) Since the control data is converted by the data conversion software when the data is laid open and referred to between the basic software component and the control application component, the invocation of the data conversion program is omitted when performing data transfer without data conversion, between software components on the basic software side or those on the control application side. This results in an enhancement of software processing ' efficiency.

In the above-described embodiments, the data public side software component and the data reference side software component were treated as ones different from each other, but it is also possible to lay open a piece of data that is one component as well as to refer to another piece of data. In a software component that combines the public data 2 of the data public side software component 1 in Fig. 1 and reference request data of the data reference side software components 7, 8, and 9, each piece of data is specified by input/output interface specifications that clearly specifies whether each piece of data is a piece of public data or a piece of reference request data, whereby the data conversion software performs an update of the data storage 6 comprising reference variables 5A and 5B, following the procedure described in Figs. 7 to 18, in the conversion processing of the data clearly specified as public data.

Also, in the above-described embodiments, as an embodiment of the data storage 6 in Fig. 1, an example of control application section 10 is shown in which the AP variable 14 is provided in Fig. 5. However, the AP variable 14 may also be disposed in the basic software section 20 or the framework 30.

With such an arrangement used, since the application software can be designed independently of the layout of the data storage, the number of man-hours needed for this design can be reduced, which produces an even more man-hour reduction effect when changes in application software are frequently made.

Having described some embodiments of the present invention, the present invention may be embodied in various forms. For example, when the vehicle control system comprises a plurality of ECUs, sensor measurement values, actuator outputs and the like that are to be converted by the vehicle control software into which the present invention is incorporated, are not limited to sensor measurement values, actuator outputs and the like of a single ECU, but may also be those of other ECUs that can be referred to via a network.

The above features and embodiments can be combined in any way partly or as a whole.

## Claims

1. A vehicle control computer program comprising:
control data serving as information for controlling a vehicle;
a plurality of reference side software components (7, 8, 9) serving as a first software component for referring to the control data; and
a public side software component (1) serving as a second software component; and
data conversion software (3) for converting a data format of the control data when transferring the control data between the public side software component (1) and each of the reference side software components (7, 8, 9),
**characterized in that** the public side software component serving as a second software component provides and updates the control data with timings determined for each reference side software component, the data conversion software (3) is subjected to an activate request at a predetermined timing, acquires the control data from the public side software component (1), and converts the acquired control data at the predetermined timing into a data format to which the public side software component (1) refers,
wherein the data conversion software (3) stores the converted control data as reference data; and
wherein each of the reference side software components (7, 8, 9) refers to the reference data.

2. The vehicle control computer program according to Claim 1, wherein the data conversion software (3) transfers the converted control data to each of the reference side software components (7, 8, 9), using data request command prepared by each of the reference side software components (7, 8, 9).

3. The vehicle control computer program according to Claim 1 or 2, wherein the data format converted by the data conversion software (3) at the predetermined timing when the control data is transferred between the public side software component (1) and each of the reference side software components (7, 8, 9), is at least either one of a variable name and a unit of variable.

4. The vehicle control computer program according to at least one of Claims 1 to 3, wherein the timing at which the data conversion software (3) is subjected to an activate request is set independently of the timing at which each of the reference side software components (7, 8, 9) is subjected to an activate request by a real time operating system (21).

5. The vehicle control computer program according to at least one of Claims 1 to 4, wherein the timing at which the data conversion software (3) is subjected to an activate request is set independently of the timing at which the public side software component (1) is subjected to an activate request by the real time operating system (21).

6. The vehicle control computer program according to at least one of Claims 1 to 5, wherein the timing at which the data conversion software (3) is subjected to an activate request, is at least either one of a time period or an interrupt signal.

7. The vehicle control computer program according to at least one of Claims 1 to 6, wherein the second software component comprises:
a basic software component for controlling an electronic vehicle control apparatus equipped with vehicle control software, sensors, and actuators; and
a control application component for controlling the state of an object to be controlled, using the basic software component.

8. The vehicle control computer program according to at least one of Claims 1 to 7, wherein the control data is converted by the data conversion software (3) when the data is laid open and referred to between the basic software component and the control application component.

9. The vehicle control computer program according to at least one of Claims 1 to 8, wherein the second software component is a component that provides the control data and that refers to the control data.

10. The vehicle control computer program according to at least one of Claims 1 to 9, wherein the second software component has an interface that acquires and transfers the control data between the public data and reference request data.

11. A vehicle control apparatus for controlling a vehicle using a microcomputer, the apparatus comprising the computer program according to at least one of Claims 1 to 10.

## Patentansprüche

1. Fahrzeugsteuerungs-Computerprogramm mit:
Steuerungsdaten, die als Information zum Steuern eines Fahrzeugs dienen;
mehreren Bezugsseiten-Softwarekomponenten (7, 8, 9), die als eine erste Softwarekomponente zur Bezugnahme auf die Steuerungsdaten dienen; und
einer Öffentliche-Seite-Softwarekomponente (1), die als zweite Softwarekomponente dient; und
einer Datenumwandlungssoftware (3) zum Umwandeln eines Datenformats der Steuerungsdaten bei der Übertragung der Steuerungsdaten zwischen der Öffentliche-Seite-Softwarekomponente (1) und jeder der Bezugsseiten-Softwarekomponenten (7, 8, 9),
**dadurch gekennzeichnet, dass** die Öffentliche-Seite-Softwarekomponente, die als zweite Softwarekomponente dient, die Steuerungsdaten mit Zeiteinstellungen, die für jede Bezugsseiten-Softwarekomponente bestimmt werden, versieht und sie aktualisiert sowie die Datenumwandlungssoftware (3) zu einer vorgegebenen Zeiteinstellung einer Aktivierungsanfrage unterzogen wird, die Steuerungsdaten von der Öffentliche-Seite-Softwarekomponente (1) erwirbt und die erworbenen Steuerungsdaten zur vorgegebenen Zeiteinstellung in ein Datenformat umwandelt, auf das sich die Öffentliche-Seite-Softwarekomponente (1) bezieht,
wobei die Datenumwandlungssoftware (3) die umgewandelten Steuerungsdaten als Bezugsdaten steuert; und
wobei jede der Bezugsseiten-Softwarekomponenten (7, 8, 9) auf die Bezugsdaten Bezug nimmt.

2. Fahrzeugsteuerungs-Computerprogramm nach Anspruch 1, wobei die Datenumwandlungssoftware (3) die umgewandelten Steuerungsdaten auf jede der Bezugsseiten-Softwarekomponenten (7, 8, 9) unter Verwendung des Datenanfragebefehls überträgt, der von jeder der Bezugsseiten-Softwarekomponenten (7, 8, 9) vorbereitet wird.

3. Fahrzeugsteuerungs-Computerprogramm nach Anspruch 1 oder 2, wobei das Datenformat, das von der Datenumwandlungssoftware (3) zu der vorgegebenen Zeiteinstellung umgewandelt wird, wenn die Steuerungsdaten zwischen der Öffentliche-Seite-Softwarekomponente (1) und jeder der Bezugsseiten-Softwarekomponenten (7, 8, 9) übertragen werden, zumindest ein Variablenname oder eine Variableneinheit ist.

4. Fahrzeugsteuerungs-Computerprogramm nach zumindest einem der Anspruche 1 bis 3, wobei die Zeiteinstellung, zu der die Datenumwandlungssoftware (3) einer Aktivierungsanfrage unterzogen wird, unabhängig von der Zeiteinstellung, zu der jede der Bezugsseiten-Softwarekomponenten (7, 8, 9) einer Aktivierungsanfrage durch ein Echtzeit-Betriebssystem (21) unterzogen wird, eingestellt wird.

5. Fahrzeugsteuerungs-Computerprogramm nach zumindest einem der Ansprüche 1 bis 4, wobei die Zeiteinstellung, zu der die Datenumwandlungssoftware (3) einer Aktivierungsanfrage unterzogen wird, unabhängig von der Zeiteinstellung, zu der die Öffentliche-Seite-Softwarekomponente (1) einer Aktivierungsanfrage durch das Echtzeit-Betriebssystem (21) unterzogen wird, eingestellt wird.

6. Fahrzeugsteuerungs-Computerprogramm nach zumindest einem der Ansprüche 1 bis 5, wobei die Zeiteinstellung, zu der die Datenumwandlungssoftware (3) einer Aktivierungsanfrage unterzogen wird, zumindest eine Zeitspanne oder ein Unterbrechungssignal ist.

7. Fahrzeugsteuerungs-Computerprogramm nach zumindest einem der Ansprüche 1 bis 6, wobei die zweite Softwarekomponente Folgendes umfasst:
eine Basissoftwarekomponente zum Steuern einer elektronischen Fahrzeugsteuerungsvorrichtung, die mit Fahrzeugsteuerungssoftware, Sensoren und Aktuatoren ausgestattet ist; und
eine Steuerungsanwendungskomponente zum Steuern des Zustands eines zu steuernden Objekts unter Verwendung der Basissoftwarekomponente.

8. Fahrzeugsteuerungs-Computerprogramm nach zumindest einem der Ansprüche 1 bis 7, wobei die Steuerungsdaten durch die Datenumwandlungssoftware (3) umgewandelt werden, wenn die Daten zwischen der Basissoftwarekomponente und der Steuerungsanwendungskomponente offengelegt sind und auf sie Bezug genommen wird.

9. Fahrzeugsteuerungs-Computerprogramm nach zumindest einem der Ansprüche 1 bis 8, wobei die zweite Softwarekomponente eine Komponente ist, die die Steuerungsdaten bereitstellt und die auf die Steuerungsdaten Bezug nimmt.

10. Fahrzeugsteuerungs-Computerprogramm nach zumindest einem der Ansprüche 1 bis 9, wobei die zweite Softwarekomponente eine Schnittstelle aufweist, die die Steuerungsdaten erwirbt und zwischen den öffentlichen Daten und den Bezugsanfragedaten überträgt.

11. Fahrzeugsteuerungsvorrichtung zum Steuern eines Fahrzeugs unter Verwendung eines Mikrocomputers, wobei die Vorrichtung das Computerprogramm nach zumindest einem der Ansprüche 1 bis 10 umfasst.

## Revendications

1. Programme informatique de commande de véhicule comportant :
des données de commande servant d'informations pour commander un véhicule,
une pluralité de composants de logiciel du côté référence (7, 8, 9) servant de premier composant de logiciel pour se référer aux données de commande, et
un composant de logiciel du côté public (1) servant de second composant de logiciel, et
un logiciel de conversion de données (3) pour convertir un format de données des données de commande lors du transfert des données de commande entre le composant de logiciel du côté public (1) et chacun des composants de logiciel du côté référence (7, 8, 9),
**caractérisé en ce que** le composant de logiciel du côté public servant de second composant de logiciel fournit et met à jour les données de commande à des instants déterminés pour chaque composant de logiciel du côté référence, le logiciel de conversion de données (3) est soumis à une demande d'activation à un instant prédéterminé, acquiert les données de commande depuis le composant de logiciel du côté public (1), et convertit les données de commande acquises à l'instant prédéterminé en un format de données auquel le composant de logiciel du côté public (1) se réfère,
dans lequel le logiciel de conversion de données (3) mémorise les données de commande converties sous forme de données de référence, et
dans lequel chacun des composants de logiciel du côté référence (7, 8, 9) se réfère aux données de référence.

2. Programme informatique de commande de véhicule selon la revendication 1, dans lequel le logiciel de conversion de données (3) transfère les données de commande converties vers chacun des composants de logiciel du côté référence (7, 8, 9), en utilisant une instruction de demande de données préparée par chacun des composants de logiciel du côté référence (7, 8, 9).

3. Programme informatique de commande de véhicule selon la revendication 1 ou 2, dans lequel le format de données converti par le logiciel de conversion de données (3) à l'instant prédéterminé lorsque les données de commande sont transférées entre le composant de logiciel du côté public (1) et chacun des composants de logiciel du côté référence (7, 8, 9), est au moins l'un d'un nom variable et d'une unité de variable.

4. Programme informatique de commande de véhicule selon au moins l'une des revendications 1 à 3, dans lequel l'instant auquel le logiciel de conversion de données (3) est soumis à une demande d'activation est défini indépendamment de l'instant auquel chacun des composants de logiciel du côté référence (7, 8, 9) est soumis à une demande d'activation par un système d'exploitation en temps réel (21).

5. Programme informatique de commande de véhicule selon au moins l'une des revendications 1 à 4, dans lequel l'instant auquel le logiciel de conversion de données (3) est soumis à une demande d'activation est défini indépendamment de l'instant auquel le composant de logiciel du côté public (1) est soumis à une demande d'activation par le système d'exploitation en temps réel (21).

6. Programme informatique de commande de véhicule selon au moins l'une des revendications 1 à 5, dans lequel l'instant auquel le logiciel de conversion de données (3) est soumis à une demande d'activation, est au moins l'un d'une période de temps ou d'un signal d'interruption.

7. Programme informatique de commande de véhicule selon au moins l'une des revendications 1 à 6, dans lequel le second composant de logiciel comporte :
un composant de logiciel de base pour commander un dispositif de commande de véhicule électronique équipé d'un logiciel de commande de véhicule, de détecteurs, et d'actionneurs, et
un composant d'application de commande pour commander l'état d'un objet à commander, en utilisant le composant de logiciel de base.

8. Programme informatique de commande de véhicule selon au moins l'une des revendications 1 à 7, dans lequel les données de commande sont converties par le logiciel de conversion de données (3) lorsque les données sont ouvertes et font l'objet d'une référence entre le composant de logiciel de base et le composant d'application de commande.

9. Programme informatique de commande de véhicule selon au moins l'une des revendications 1 à 8, dans lequel le second composant de logiciel est un composant qui fournit les données de commande et qui se réfère aux données de commande.

10. Programme informatique de commande de véhicule selon au moins l'une des revendications 1 à 9, dans lequel le second composant de logiciel a une interface qui acquiert et transfère les données de commande entre les données publiques et les données de demande de référence.

11. Dispositif de commande de véhicule pour commander un véhicule en utilisant un micro-ordinateur, le dispositif comportant le programme informatique conforcément à au moins l'une des revendications 1 à 10.
